# EUROPÄISCHE PATENTSCHRIFT

(11) **EP 3 183 070 B1**
(45) Veröffentlichungstag und Bekanntmachung des Hinweises auf die Patenterteilung: **19.12.2018**
(21) Anmeldenummer: 15774511.8
(22) Anmeldetag: 28.07.2015
(51) Int. Cl.: B07C 3/00, B65G 57/30

(54) **VERFAHREN UND ANLAGE ZUM SORTIEREN VON GEGENSTÄNDEN**
METHOD AND SYSTEM FOR SORTING OBJECTS
PROCÉDÉ ET INSTALLATION POUR TRIER DES OBJETS

(30) Priorität: 22.08.2014 DE 102014216788
(43) Veröffentlichungstag der Anmeldung: 28.06.2017
(73) Patentinhaber: Siemens Aktiengesellschaft, 80333 München (DE)
(72) Erfinder: BERDELLE-HILGE, Peter, 78464 Konstanz (DE)
(74) Vertreter: Maier, Daniel Oliver
(86) Internationale Anmeldenummer: PCT/EP2015/067293
(87) Internationale Veröffentlichungsnummer: WO 2016/026659

(56) Entgegenhaltungen:
- DE-U1- 29 701 565
- DE-U1- 29 724 039

## Beschreibung

Die Erfindung betrifft ein Verfahren und eine Anlage zum Sortieren von Gegenständen, insbesondere von flachen Gegenständen beispielsweise von Postsendungen.

Verfahren und Anlagen der gattungsgemäßen Art sind bekannt. Demnach werden die Gegenstände mittels einer Sortiereinrichtung entsprechend wenigstens eines Sortiermerkmals sortiert. Die Sortiereinrichtungen weisen Übergabeeinrichtungen für die sortieren Gegenstände auf, wobei diese in Behälter überführt werden können. Die Sortiermerkmale, nach denen sortiert wird, entsprechen üblicherweise einer vorgegebenen Verteilreihenfolge von Postsendungen.

Die mehreren Sortierläufe erfolgen aufeinanderfolgend auf der gleichen Sortiereinrichtung. Die in der ersten Sortierfolge sortierten Gegenstände müssen somit nach dem ersten Sortierlauf der Sortiereinrichtung wieder an deren Eingangsseite zugeführt werden. Dies führt dazu, dass das gesamte Prozessvolumen also die Gesamtmenge der zu sortierenden Gegenstände, während eines Sortierdurchlaufes zwischengespeichert und danach während des nachfolgenden Sortierlaufes wieder zur Stoffeingabe der Sortiereinrichtung gebracht werden. Dieses Zwischenspeichern erfolgt in Speichereinrichtungen, die eine Vielzahl von Speicherplätzen für die Behälter besitzt.

Bekannt ist, die Behälter von den Übergabeeinrichtungen der Sortiereinrichtung in die Speichereinrichtungen mittels einer Hubeinrichtung zu überführen.

Aus US 6,026,967 A ist eine Anlage zum Sortieren von Gegenständen bekannt, bei der diese Hubeinrichtung von einem auf einem Schienensystem verfahrbaren Manipulator gebildet ist. Dieser besitzt eine Plattform, die entsprechend eines kartesischen Koordinatensystems in drei Raumrichtungen verlagerbar ist. Die Bestückung der einzelnen Speicherplätze erfolgt somit von einer Vorderseite der Speichereinrichtung, wobei in jedes Speicherfach ein Behälter verlagert werden kann. Hierbei ist der relativ große Raumbedarf für die Hubeinrichtung nachteilig.

Die Schrift DE 297 01 565 U1 beschreibt einen Sortierpuffer für Behälter-Transporteinheiten, der im Transportweg der Behälter zwischen einem Behälter-Verteilsystem und einem Arbeitsplatz angeordnet ist, wobei der Sortierpuffer folgendes aufweist:
- eine Einlagerstrecke zum Einlagern von Behältern in den Sortierpuffer,
- eine Auslagerstrecke zum Auslagern von Behältern aus dem Sortierpuffer,
- eine Mehrzahl von Stellplätzen innerhalb des Sortierpuffers, sowie
- eine Bedieneinheit.

Aus der Schrift DE 297 24 039 U1 ist eine Kommissionieranlage offenbart, die ein Behälterlager und Fördereinrichtungen zum Transport der Behälter aus dem Behälterlager zu einer Mehrzahl von Kommissionier-Arbeitsplätzen aufweist. Dabei ist zwischen dem Behälterlager und den Arbeitsplätzen ein Verteilsystem zum Verteilen der Behälter auf die einzelnen Arbeitsplätze, wobei zwischen dem Verteilsystem und den Arbeitsplätzen jeweils ein Sortierpuffer angeordnet ist.

Den vorgenannten zwei Lösungen mit Sortierpuffern ist nachteilig, dass der Raumbedarf aufgrund der longitudinalen Anordnung relativ gross ist.

Der Erfindung liegt die Aufgabe zugrunde, ein Verfahren und eine Anlage der gattungsgemäßen Art zu schaffen, mit denen in einfacher Weise eine Übergabe von sortierten Gegenständen aufnehmenden Behältern an eine Speichereinrichtung bei geringem Bauraumbedarf erfolgen kann.

Erfindungsgemäß wird die Aufgabe durch ein Verfahren mit den in Anspruch 1 genannten Merkmalen gelöst. Dadurch, dass die sortierten Gegenstände in einen Behälter eingebracht werden und die Behälter in der Speichereinrichtung übereinander angeordnet werden, wobei die Behälter mittels einer vertikalen Hubbewegung unterhalb der wenigstens einen Speicherebne in die Speichereinrichtung eingebracht werden, ist es möglich, die Behälter von der Unterseite der Speichereinrichtung in diese einzubringen. Ein Verfahren der Behälter in mehreren Raumrichtungen neben der Speichereinrichtung ist somit nicht mehr erforderlich. Die Hubeinrichtung selber kann hierdurch einfacher aufgebaut werden, da nur noch vertikale Hubbewegungen erforderlich sind. Auch ergeben sich flexiblere Einlagerungsmöglichkeiten in den Behälter in der Speichereinrichtung.

Erfindungsgemäß wird die Aufgabe ferner durch eine Anlage zum Sortieren von Gegenständen mit den in Anspruch 8 genannten Merkmalen gelöst. Dadurch, dass die Speichereinrichtung wenigstens eine Speicherebene aufweist und ein Übergabepunkt der sortierten Behälter an die Speichereinrichtung unterhalb der Speicherebenen angeordnet ist, wird vorteilhaft möglich, die Speichereinrichtung mit den Behältern vertikal zu beschicken. Durch eine vertikale Hubbewegung können die Behälter in die einzelnen Speicherebenen, das heißt übereinander eingebracht werden. Der Aufbau der Speichereinrichtung und der Hubeinrichtung wird somit vereinfacht, da Bewegungsabläufe der Behälter in der Speichereinrichtung nur in einer Raumrichtung erfolgen.

Weitere bevorzugte Ausgestaltung der Erfindung ergeben sich aus den übrigen in den Unteransprüchen genannten Merkmalen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine schematische Ansicht einer Anlage zum Sortieren von Gegenständen;
- Figuren 2 bis 16: verschiedene Phasen der Bestückung einer Speicher- einrichtung mit Behältern.

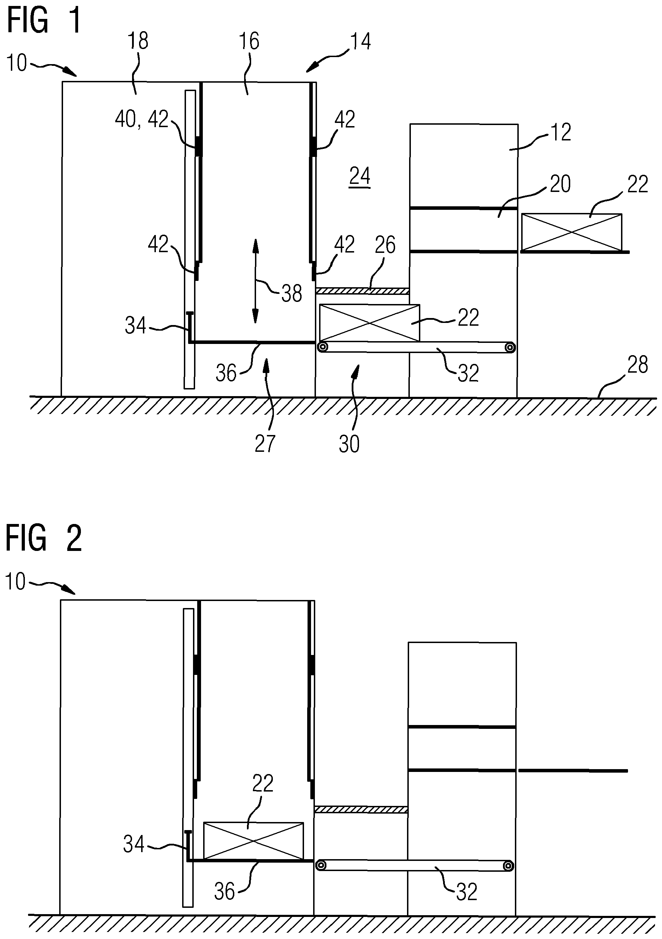

Figur 1 zeigt eine insgesamt mit 10 bezeichnete Anlage zum Sortieren von Gegenständen, insbesondere von Briefen.

Die Anlage 10 umfasst eine Sortiereinrichtung 12 sowie eine Speichereinrichtung 14, die im gezeigten Beispiel zwei Speicherwände 16 und 18 aufweist.

Die Sortiereinrichtung 12 weist eine Ausgabeeinrichtung 20, eine so genannte Stapelstelle auf, über die Behälter 22 mit zu sortierenden Gegenständen, beispielsweise Briefen, der Sortiereinrichtung 12 gefüllt werden. Die Behälter 22 können hierbei manuell, semi-automatisch oder vollautomatisch der Sortiereinrichtung 12 entnommen werden.

Zwischen der Sortiereinrichtung 12 und der Speichereinrichtung 14 ist ein Gang 24 vorgesehen, der eine Lauffläche 26 besitzt. Der Gang 24 ist zur Begehung durch Wartungs- beziehungsweise Bedienungspersonal für die Anlage 10 geeignet. Die Lauffläche 26 ist hierbei oberhalb eines Bodenniveaus 28 angeordnet. Somit kommt es unterhalb der Lauffläche 26 zu einem Übergabebereich 30, in dem die Behälter 22 mittels einer Übergabeeinrichtung 32 in die Speichereinrichtung 14 überführt werden können. In der Übergabeeinrichtung 32 beinhalten die Behälter 22 dann die durch die Sortiereinrichtung 12 sortierten Gegenstände.

Der Speichereinrichtung 14 ist eine Hubeinrichtung 34 zugeordnet, die ein Lastaufnahmemittel 36 umfasst. Das Lastaufnahmemittel 36 ist entsprechend des dargestellten Doppelpfeiles 38 vertikal innerhalb der Speichereinrichtung 14 verfahrbar. Hierbei kann das Lastaufnahmemittel 36 sowohl in der Speicherwand 16 als auch in der Speicherwand 18 vertikal bewegt werden. Hierzu ist das Lastaufnahmemittel 36 beispielsweise an der Hubeinrichtung 34 entsprechend verschieblich oder schwenkbeweglich gelagert. Zusätzlich ist eine Verfahreinrichtung vorgesehen, mittels der die Hubeinrichtung 34 entlang der Speichereinrichtung 14 verfahrbar ist (senkrecht zur Zeichnungsebene).

Ein Antrieb der Hubeinrichtung 34 kann beispielsweise elektromotorisch, pneumatisch oder hydraulisch erfolgen.

Ein Übergabepunkt 27 für die Behälter 22 befindet sich unterhalb der wenigstens einen Speicherebene 25.

Innerhalb der Speicherwände 16 und 18 (hier nur in der Speicherwand 16 dargestellt) sind Halteelemente 40 vorgesehen. Die Halteelemente 40 werden hier beispielsweise von Klappen 42 gebildet, die verschwenkbar gelagert sind. Die Klappen 42 können hierbei in eine senkrechte Position (gezeigt in Figur 1) und in eine waagerechte Position klappen. Dies kann gegebenenfalls mit einer mechanischen Flip-Flop-Funktion erfolgen, die durch das Lastaufnahmemittel 36 gesteuert wird. Die Klappen 42 können auch einen eigenen Antrieb für die Klappfunktion aufweisen. Auch kann ein Aktor auf der Hubeinrichtung 34 oder dem Lastaufnahmemittel 36 vorgesehen sein.

Die Anlage 10 kann ein weiteres Regalbediengerät aufweisen, das an der Vorderseite der Anlage die Behälter 22 automatisch in die Übergabeeinrichtung 32 überführt. Hierzu ist lediglich eine Hubbewegung notwendig, die den Gang vor der Maschine freilässt.

Die Darstellung in Figur 1 zeigt eine Schnittdarstellung durch eine Anlage 10. Die Anlage 10 selber besitzt nebeneinander angeordnete Speicherplätze. Die Speichereinrichtung 14 ist an der Rückseite der Sortiereinrichtung 12 angeordnet. Die Sortiereinrichtung 12 ist somit von vorne (hier rechts dargestellt) für Bedienungs- beziehungsweise Beschickungspersonen zugänglich. Die Sortiereinrichtung 12 und die Speichereinrichtung 14 können hierbei geradlinig oder auch in einem beliebigen anderen Verlauf, bis hin zu einem geschlossenen Kreislauf ausgebildet sein.

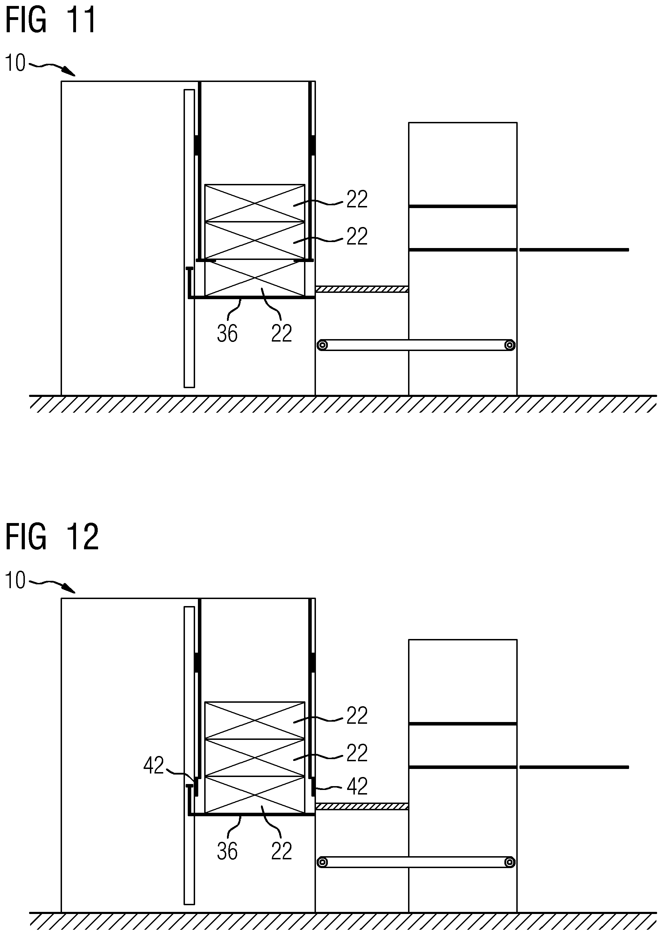

Die Funktion der Anlage 10 beziehungsweise das Einbringen der Behälter 22 in die Speichereinrichtung 14 wird anhand der nachfolgenden Figuren 2 bis 16 erläutert. Hierbei sind in den einzelnen Figuren die einzelnen Verfahrensschritte verdeutlicht. Gleiche Teile wie in Figur 1 sind jeweils mit gleichen Bezugszeichen versehen und nicht nochmals erläutert.

In Figur 2 wird gezeigt, wie ein Behälter 22 von der Übergabeeinrichtung 32 auf das Lastaufnahmemittel 36 der Hubeinrichtung 34 überführt wird. Die Übergabeeinrichtung 32 umfasst hierzu eine geeignete Transporteinrichtung, die beispielsweise von einem angetriebenen oben laufenden Gurt gebildet sein kann. Auch ist möglich, die Übergabeeinrichtung 32 in einer derartigen Schrägstellung vorzusehen, dass eine ausreichende Hangabtriebskraft erzeugt wird, mittels der der Behälter 22 selbsttätig bis zum Ende der Hubeinrichtung 34 rutscht. Die Hubeinrichtung 34 kann auch mehrere Behälter 22 aufnehmen.

Alternativ ist auch eine manuelle oder semi-automatisch Beladung der Übergabeeinrichtung 32 mit den Behältern 22 möglich.

Hier kann beispielsweise ein gegebenenfalls angetriebener Verfahrwagen mit integrierten Vorrichtungen zur Übernahme der Behälter 22 von der Sortiereinrichtung 12 (Stapelvorrichtung) sowie zur Absenkung auf die Höhe des Lastaufnahmemittels 36 beziehungsweise der Übergabeeinrichtung 32 verwendet werden. Dieser nicht dargestellte Verfahrwagen agiert im Gang 24. Auch eine stationäre Absenkvorrichtung pro Stapelfach der Sortiereinrichtung 12, beispielsweise in Form eines Gelenkgetriebes ist möglich.

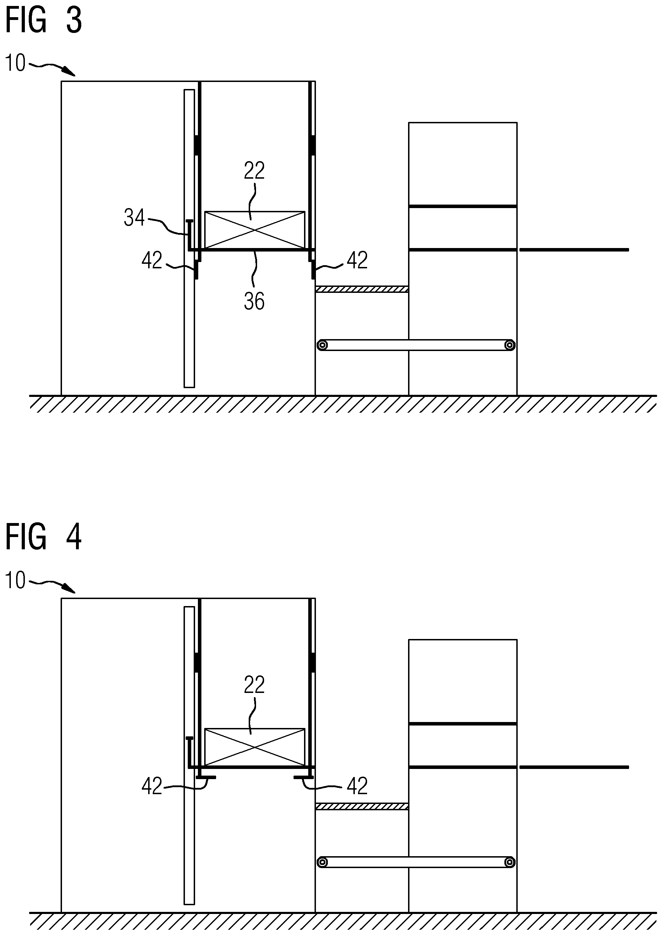

Nachdem der Behälter 22 auf dem Lastaufnahmemittel 36 angeordnet ist, wird das Lastaufnahmemittel 36 mittels der Hubeinrichtung 34 vertikal nach oben verfahren. Hierbei erfolgt eine Hubbewegung bis oberhalb der unteren Klappen 42 (Figur 3). Insgesamt sind vier untere Klappen 42 pro Speicherwand 16, 18 vorgesehen.

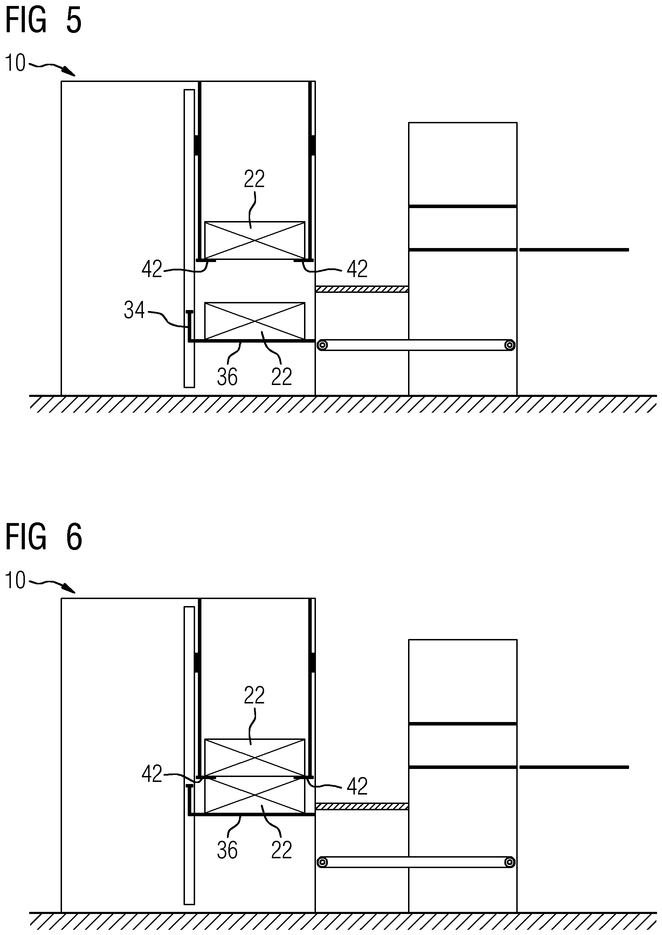

Anschließend werden die Klappen 42, wie Figur 4 zeigt, von ihrer senkrechten in ihre horizontale Position umgeklappt. Diese können also eine bistabile Position einnehmen. Das Lastaufnahmemittel 36 wird dann abgesenkt und fährt wieder in seine Übernahmeposition. Hierbei kommt das Gehäuse 22 in Anlagekontakt mit den Klappen 42 und wird von diesen in der Zwischenspeicherposition gehalten. Das Lastaufnahmemittel 36 verfährt dann in die Übernahmeposition und übernimmt einen neuen Behälter 22, wie dies Figur 5 verdeutlicht.

Nach einer weiteren, nicht dargestellten Ausführungsvariante kann das Ablegen der Behälter 22 in den Speicherwänden 16 beziehungsweise 18 auch mittels einer Art Bajonett-Verschluss erfolgen. Hierbei wird eine entsprechend ausgebildete Behälterschnittstelle zunächst von unten durch eine Kulisse gehoben und dann horizontal verschoben und unter Ausbildung eines Formschlusses gehalten.

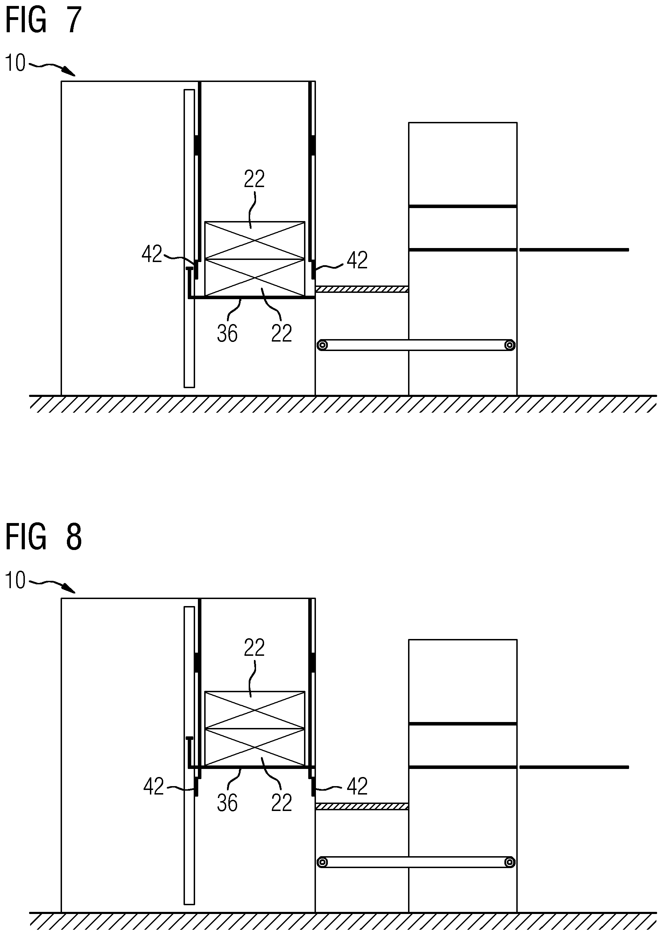

Anschließend wird der weitere Behälter 22 dann durch das Lastaufnahmemittel 36 vertikal nach oben verfahren, bis ein Anlagekontakt an den bereits zwischengespeicherten Behälter 22 erfolgt (Figur 6). In dieser Position werden dann die Klappen 42, die sich in ihrer horizontalen Halteposition für den oberen Behälter 22 befinden, in die senkrechte Ruheposition umgeklappt (Figur 7). Dies kann beispielsweise durch die Behälter 22 erfolgen.

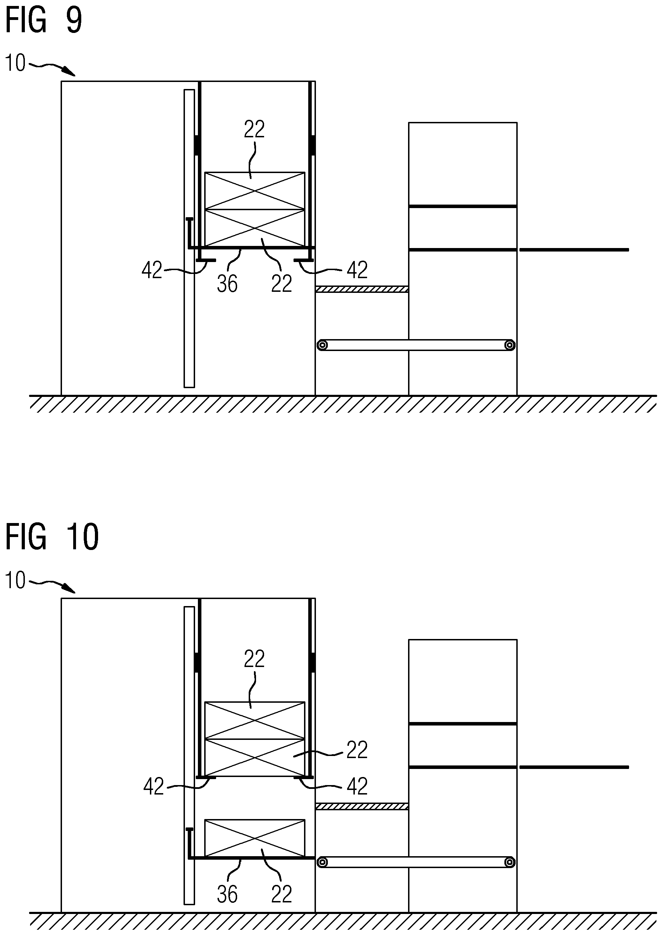

Anschließend werden dann, wie Figur 8 verdeutlicht, durch das Lastaufnahmemittel 36, die jetzt einen Stapel 23 bildenden Behälter 22 gemeinsam bis oberhalb der unteren Klappen 42 verlagert. Die Klappen 42 werden dann wieder, wie Figur 9 zeigt, in ihre horizontale Position geklappt, so dass dann, wie Figur 10 verdeutlicht, der aus den beiden Behältern 22 bestehende Stapel 23 auf den Klappen 42 zwischengespeichert wird. Das Lastaufnahmemittel 36 verfährt wieder in seine Übernahmeposition und kann einen weiteren Behälter 22 aufnehmen.

Dann wird wiederum, wie in den Figuren 10 bis 12 verdeutlicht, der neue Behälter 22 mittels des Lastaufnahmemittels 36 von unten an den bereits bestehenden Stapel 23 der zwei Behälter 22 herangefahren. Die Klappen 42 werden wiederum von ihrer horizontalen in ihre senkrechte Position geklappt, so dass der Stapel 23 aus den dann drei Behältern 22 an den unteren Klappen 42 vorbei bewegt werden kann.

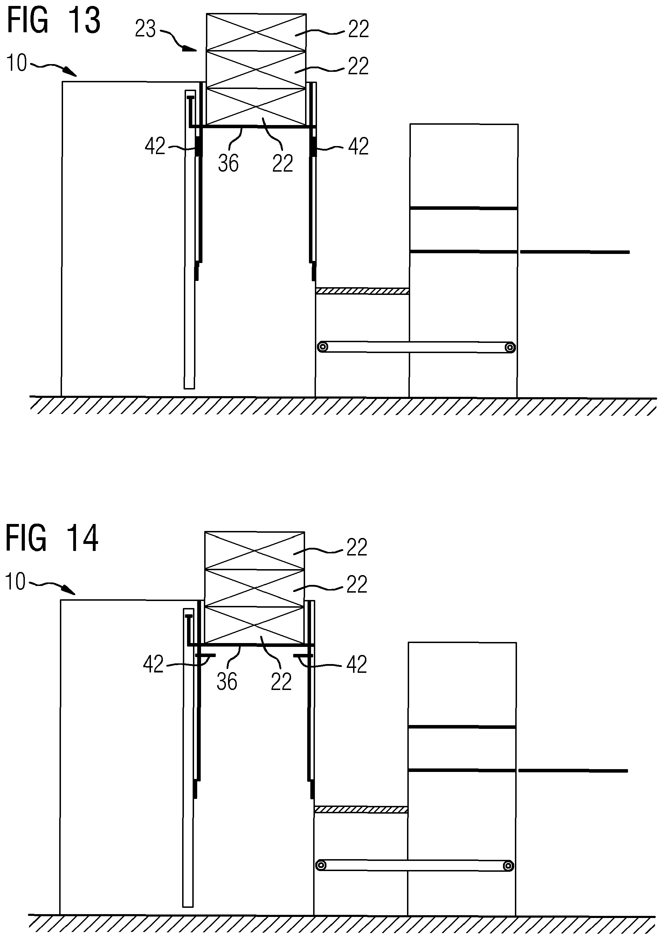

Wie die Figuren 13 bis 15 verdeutlichen, wird anschließend der nunmehr aus den drei Behältern 22 bestehende Stapel 23 mittels des Lastaufnahmemittels 36 in eine obere Position oberhalb der oberen Klappen 42 verfahren. Diese werden dann von ihrer senkrechten in ihre horizontale Halteposition gebracht, so dass der aus den drei Behältern 22 bestehende Stapel 23 auf den oberen Klappen 42 zwischengespeichert ist. Das Lastaufnahmemittel 36 kann dann wieder in seine Übernahmeposition verfahren. Der Stapel 23 der drei Behälter 22 befindet sich somit in einer oberen Speicherebene 25 der Speichereinrichtung 14.

Gemäß den Darstellungen in den Figuren 1 bis 15 sind zwei übereinander angeordnete Speicherebenen 25, die jeweils durch die Anordnung der Klappen 42 definiert werden, vorgesehen. Nach weiteren Ausführungsbeispielen können natürlich auch mehr oder weniger Speicherebenen 25 vorhanden sein.

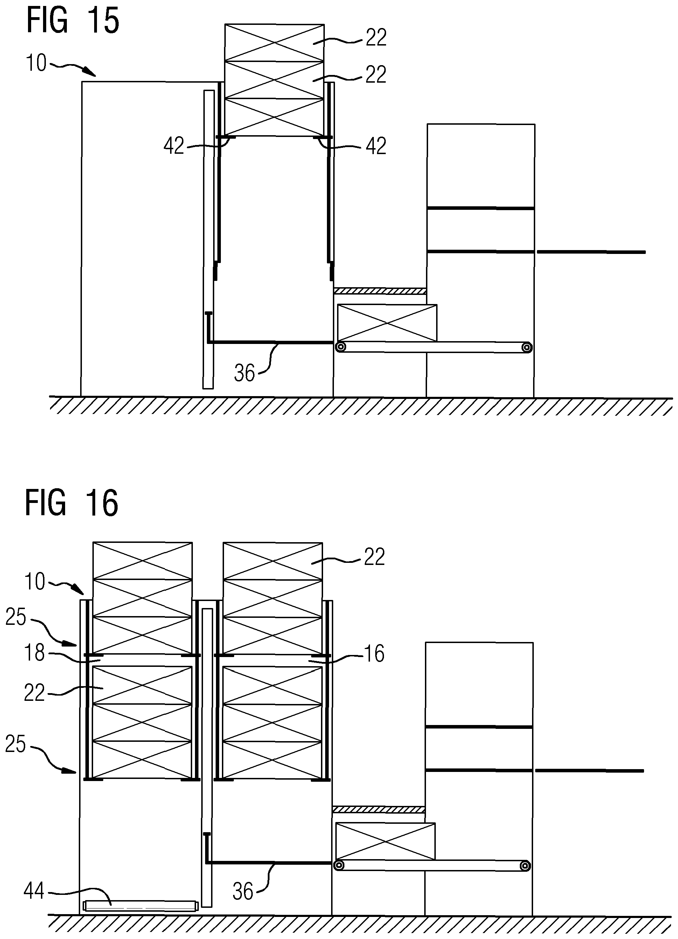

Wie schließlich Figur 16 verdeutlicht, kann die Einlagerung von Behältern 22 in beiden Speicherwänden 16 und 18 erfolgen, wobei hier auf jeder der Speicherebenen 25 beispielsweise drei Behälter 22 jeweils zwischengespeichert sind. Die Einlagerung erfolgt entsprechend des in den vorhergehenden Figuren erläuterten Verfahrensablaufes.

Nach einem weiteren Ausführungsbeispiel kann auch die Einlagerung von nicht stapelbaren Behältern erfolgen. Hierbei wird dann jeweils ein Behälter in jeweils eine Speicherebene 25 der Speicherwände 16 und 18 eingebracht. Möglich ist auch eine Mischform wonach teilweise Stapel 23 von Behältern 22 und teilweise nicht stapelbare Behälter eingelagert werden.

Der Einlagerungsprozess erfolgt zur Minimierung der Vertikalhübe in Abhängigkeit davon, ob auf den Speicherebenen 25 Stapel 23 gebildet werden sollen oder nicht.

Sollen Stapel 23 von Behältern 22 eingelagert werden, kann dies auch so erfolgen, dass diese sofort einzeln in die obere Speicherebene 25 verfahren werden. Ein Zwischenspeichern von Behältern in der unteren Speicherebene 25 um diese dann gemeinsam in die obere Speicherebene 25 zu verlagern, würde damit entfallen. Allerdings würde der Hubweg des Lastaufnahmemittels 36 sich damit vergrößern. Das Einlagern der Behälter 22 erfolgt immer beginnend mit den oberen Speicherebenen 25 nach unten, damit die Zugänglichkeit des Lastaufnahmemittels 36 zu den unteren, noch nicht belegten Speicherebenen 25 erhalten bleibt.

Die Auslagerung der Behälter 22 beziehungsweise der Stapel 23 von Behältern 22 erfolgt in umgekehrter Reihenfolge zu ihrer Einlagerung, beginnend mit der untersten Speicherebene 25. Hierbei können die Behälter beziehungsweise Behälterstapel von verschiedenen Aufnahmeebenen durch Verfahren des Lastaufnahmemittels 36 von unten nach oben und entsprechender Ansteuerung der Klappen 42 beliebig addiert beziehungsweise gestapelt werden. Der hierdurch entstehende Stapel 23 der Behälter 22 kann dann auf einer Transporteinrichtung abgesetzt werden. Hierzu kann, wie in Figur 16 angedeutet, unterhalb der Speicherwände 16 beziehungsweise 18 eine Transporteinrichtung 44 (ein Transportband) vorgesehen sein.

Sowohl die Stapelspeicherung als auch die Einzelspeicherung der Behälter 22 weist eine Last-in-first-out (LIFO)-Charakteristik auf. Es muss also bei einer Gangfolge-Sortierung mit mehr als zwei Sortierdurchläufen, die Reihenfolge der Behälter eines Stapels vor der Entladung invertiert werden.

Durch die Anordnung von zwei Speicherwänden 16 und 18, die unabhängig voneinander beschickt werden können, ist es möglich, dass zeitlich abwechselnd eine Speicherwand die gefüllten Behälter 22 aus dem vorangegangenen Sortierlauf beinhaltet. In die andere Speicherwand werden dann die gefüllten Behälter aus dem aktuellen Sortierlauf eingespeichert. Die aus dem vorhergehenden Sortierlauf befüllten Behälter 22 können dann während des Speicherns der Behälter aus dem aktuellen Sortierlauf sukzessive zur Eingabeseite der Sortiereinrichtung zurücküberführt werden. Am Anfang und Ende eines derartigen Prozesses kann auch die Einlagerung von leeren Behältern möglich sein.

Zur Vermeidung eines Durchsatzverlustes bei einem Behälterwechsel wird die Möglichkeit zu einer automatischen Allokation von Stapelfächern notwendig. Dies setzt voraus, dass die gefüllten Behälter 22 einer Ausgabeeinrichtung 20 automatisch und zudem entweder mit wahlfreiem Zugriff gespeichert werden können oder zu dem Stapel 23 ihrer Zieladresse transportiert und dort eingelagert werden können.

Diese Transportaufgabe kann von mehreren Hubeinrichtungen, beispielsweise einer hinteren Hubeinrichtung und einer vorderen Hubeinrichtung bzw. Verfahrwagen bei manuellem Behälterwechsel aufgeteilt werden unter Nutzung der günstigsten Hubeinrichtung.

Die Auslagerung der Behälter aus den Lagerspalten kann allerdings nun nicht mehr in stetiger Reihenfolge entweder von vorne nach hinten oder umgekehrt erfolgen, da jetzt die Zieladressen der Lagerspalten aufgrund der automatischen Allokation vermischt sind. Ein Abtransport in beliebiger Reihenfolge setzt somit voraus, dass die ausgelagerten Behälterstapel zwischen Abtransporteinrichtung und unterster Speicherebene 25 hindurchpassen. Dagegen kann bei einer stetigen Reihenfolge in Transportrichtung die Stapelhöhe ganz beliebig sein.

Insgesamt ergeben sich durch das erfindungsgemäße Verfahren und die erfindungsgemäße Anlage eine Reihe von Vorteilen. Das Ein- und Auslagern der Behälter 22 kann in vertikaler Richtung erfolgen, so dass nur ein minimaler Bauraum des Speicherbereiches erforderlich ist. Es ist die Speicherung von einzelnen Behältern 22 und/oder von Stapeln 23 von Behältern 22 möglich. Ferner lässt sich ein Abtransport von der den Durchsatz der ganzen Anlage steigernden Stapel 23 von Behältern 22 in unterschiedlicher Höhe erzielen. Hierbei ist eine mögliche Addition der Behälter 22 von mehreren Speicherebenen 25 bei einem Abtransportvorgang möglich.

Insgesamt ergibt sich eine Reduzierung des Flächenbedarfs für die Speichereinrichtung 14.

Darüber hinaus ist ein manueller Eingriff über den Gang 24 trotz automatischer Fachentleerung möglich, da keine Verlagerung von Behältern 22 in diesem Bereich, wie beim Stand der Technik, durch eine robotergestützte in drei Koordinatenrichtungen verfahrbare Vorrichtung erfolgt.

Die Speichereinrichtung 14 ist hinter der Sortiereinrichtung 12 angeordnet. Hierdurch kann von vorne auf die Ausgabeeinrichtungen 20 zugegriffen werden.

Der Einsatz von vorderen und hinteren Hubeinrichtungen 34 ermöglicht eine Sortierung der Behälter 22 zu den richtigen Stapeln 23. Die zusätzlich benötigte richtige Reihenfolge der Behälter 22 in einem Stapel 23 entsteht automatisch durch den Prozessablauf, so dass in dem Lager kein "Random Access" notwendig ist.

Die Speichereinrichtung 14 kann die Funktion eines Zentralspeichers übernehmen, wodurch eine automatische Fach-Allokation selbst bei manueller Stapelfachentleerung möglich wird. Dies bedeutet, es entsteht kein Durchsatzverlust durch die Behälterwechsel während der Sortierläufe.

Es ist eine vollautomatische, semi-automatische oder rein manuelle Beschickung der Speichereinrichtung 14 über die Hubeinrichtungen 34 möglich, beispielsweise beim Bearbeiten eines vollautomatischen oder semi-automatischen Behälterwechsels an den Stapelvorrichtungen.

Ein Abtransport der Behälterstapel aus der Speichereinrichtung 14 mit konfigurierbarer Stapelhöhe ermöglicht eine direkte zentrale Verladung in entsprechende Behälterwagen.

Beide Speicherwände 16 und 18 der Speichereinrichtung 14 sind im Haveriefall, beispielsweise bei Stromausfall, oder bei Defekten an den Hubeinrichtungen 34 von der Außenseite her extern entladbar. Die Speichereinrichtung 14 kann selber sehr kompakt unter maximaler Raumausnutzung für die Speicherung ausgestattet sein. Durch Anheben der Behältern 22 kann auch eine Speicherung von Behältern 22 über die eigentliche Bauhöhe der Speichereinrichtung 14 hinaus erfolgen. Es ergibt sich also eine zusätzliche Vergrößerung der oberen Speicherebene 25.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Sortieren von Gegenständen, wobei die Gegenstände mit einer Sortiereinrichtung (12) entsprechend wenigstens eines Sortiermerkmals sortiert werden, die sortierten Gegenstände in Behälter (22) eingebracht werden, die Behälter (22) in eine Speichereinrichtung (14) überführt werden, wobei die Behälter (22) in der Speichereinrichtung (14) übereinander angeordnet werden und die Behälter (22) mittels einer vertikalen Hubbewegung unterhalb der wenigstens einen Speicherebene (25) eingebracht werden.

2. Verfahren nach Anspruch 1, **dadurch gekennzeichnet, dass** die Behälter (22) zu wenigstens einem Stapel (23) von Behältern (62) in der Speichereinrichtung (14) zusammengestellt werden.

3. Verfahren nach einem der vorhergehenden Ansprüche, **dadurch gekennzeichnet, dass** die Stapel (23) der Behälter (22) zunächst in einer unteren Speicherebene (25) zusammengestellt werden und anschließend der Stapel (23) in eine obere Speicherebene (25) überführt wird.

4. Verfahren nach einem der vorhergehenden Ansprüche, **dadurch gekennzeichnet, dass** die Behälter (22) durch ein Lastaufnahmemittel (36) vertikal nach oben verfahren werden.

5. Verfahren nach einem der vorhergehenden Ansprüche, **dadurch gekennzeichnet, dass** die Behälter (22) auf eine bistabile Position einnehmbare Halteelemente (40) abgelegt werden.

6. Verfahren nach einem der vorhergehenden Ansprüche, **dadurch gekennzeichnet, dass** in die Speichereinrichtung (14) einzelne Behälter (22) und/oder Stapel (23) von Behälter (22) eingebracht werden.

7. Verfahren nach einem der vorhergehenden Ansprüche, **dadurch gekennzeichnet, dass** mit der Sortiereinrichtung (12) mehrere Sortierläufe der zu sortierenden Gegenstände durchgeführt werden, wobei zeitlich abwechselnd eine Speicherwand (16) der Speichereinrichtung (14) aus einem vorangegangen Sortierlauf befüllt wird und eine weitere Speicherwand (18) mit Behältern aus einem aktuellen Sortierlauf befüllt wird.

8. Anlage (10) zum Sortieren von Gegenständen mit einer Sortiereinrichtung (12), die die Gegenstände entsprechend wenigstens eines Sortiermerkmals sortiert, wobei die Sortiereinrichtung (14) mehrere Ausgabeeinrichtungen (20) für die sortierten Gegenstände umfasst, einer Speichereinrichtung (16) zur Aufnahme von die sortierten Gegenstände aufnehmenden Behältern (22) und wenigstens einer Hubeinrichtung (34) für die Behälter (22) zur Speichereinrichtung (14), wobei die Speichereinrichtung (14) wenigstens eine Speicherebene (25) aufweist **dadurch gekennzeichnet, dass** der Übergabepunkt (27) der Behälter (22) an die Speichereinrichtung (14) unterhalb der wenigstens einen Speicherebene (25) angeordnet ist.

9. Anlage nach Anspruch 8, **dadurch gekennzeichnet, dass** die Speichereinrichtung (14) wenigstens zwei Speicherwände (16, 18) umfasst, die unabhängig voneinander mit den Behältern (22) bestückbar sind.

10. Anlage nach einem der Ansprüche 8 bis 9, **dadurch gekennzeichnet, dass** die Hubeinrichtung (34) ein Lastaufnahmemittel (36) umfasst, das sowohl in der einen Speicherwand (16) als auch in der anderen Speicherwand (18) vertikal verfahrbar ist.

11. Anlage nach einem der Ansprüche 8 bis 10, **dadurch gekennzeichnet, dass** die Speichereinrichtung (14) Haltemittel (40) zum Halten der Behälter (22) aufweist.

12. Anlage nach Anspruch 11, **dadurch gekennzeichnet, dass** die Haltemittel (40) eine bistabile Position einnehmen können.

13. Anlage nach einem der Ansprüche 8 bis 12, **dadurch gekennzeichnet, dass** die Speichereinrichtung (14) hinter der Sortiereinrichtung (12) angeordnet ist.

## Claims

1. Method for sorting objects, wherein the objects are sorted by a sorting device (12) according to at least one sorting feature, the sorted objects are introduced into containers (22), the containers (22) are transferred into a storage facility (14), wherein the containers (22) in the storage facility (14) are arranged on top of one another and the containers (22) are introduced below the at least one storage level (25) by means of a vertical lifting movement.

2. Method according to claim 1, **characterised in that** the containers (22) are combined to form at least one stack (23) of containers (62) in the storage facility (14).

3. Method according to one of the preceding claims, **characterised in that** the stacks (23) of the containers (22) are combined in a lower storage level (25) at first and the stack (23) is subsequently transferred into an upper storage level (25).

4. Method according to one of the preceding claims, **characterised in that** the containers (22) are displaced vertically upwards by a load receiving means (36).

5. Method according to one of the preceding claims, **characterised in that** the containers (22) are deposited on retaining elements (40) which are able to assume a bistable position.

6. Method according to one of the preceding claims, **characterised in that** individual containers (22) and/or stacks (23) of containers (22) are introduced into the storage facility (14).

7. Method according to one of the preceding claims, **characterised in that** a plurality of sorting runs of the objects to be sorted are performed with the sorting facility (12), wherein, alternating over time, a storage wall (16) of the storage facility (14) is filled from a previous sorting run and a further storage wall (18) is filled with containers from a current sorting run.

8. System (10) for sorting objects with a sorting facility (12), which sorts the objects according to at least one sorting feature, wherein the sorting facility (14) comprises a plurality of output facilities (20) for the sorted objects, a storage facility (16) for receiving containers (22) which accommodate the sorted objects and at least one lifting facility (34) for the containers (22) for the storage facility (14), wherein the storage facility (14) has at least one storage level (25), **characterised in that** the handover point (27) of the containers (22) to the storage facility (14) is arranged below the at least one storage level (25).

9. System according to claim 8, **characterised in that** the storage facility (14) comprises at least two storage walls (16, 18), which are able to be loaded with the containers (22) independently of one another.

10. System according to one of claims 8 to 9, **characterised in that** the lifting facility (34) comprises a load receiving means (36), which is able to be displaced vertically both in the one storage wall (16) and also in the other storage wall (18) .

11. System according to one of claims 8 to 10, **characterised in that** the storage facility (14) has retaining means (40) for retaining the containers (22).

12. System according to claim 11, **characterised in that** the retaining means (4) can assume a bistable position.

13. System according to one of claims 8 to 12, **characterised in that** the storage facility (14) is arranged behind the sorting facility (12).

## Revendications

1. Procédé de tri d'objets, dans lequel les objets sont triés avec un dispositif de tri (12) en fonction d'au moins une caractéristique de tri, dans lequel les objets triés sont introduits dans des conteneurs (22), dans lequel les conteneurs (22) sont transférés dans un dispositif de stockage (14), dans lequel les conteneurs (22) sont agencés les uns sur les autres dans le dispositif de stockage (14) et les conteneurs (22) sont introduits au moyen d'un mouvement de levage vertical en dessous du au moins un plan de stockage (25) .

2. Procédé selon la revendication 1, **caractérisé en ce que** les conteneurs (22) sont rassemblés en au moins une pile (23) de conteneurs (62) dans le dispositif de stockage (14).

3. Procédé selon l'une quelconque des revendications précédentes, **caractérisé en ce que** la pile (23) des conteneurs (22) est d'abord rassemblée dans un plan de stockage inférieur (25) et la pile (23) est ensuite transférée dans un plan de stockage supérieur (25).

4. Procédé selon l'une quelconque des revendications précédentes, **caractérisé en ce que** les conteneurs (22) sont déplacés de manière verticale vers le haut grâce à un moyen de réception de charge (36).

5. Procédé selon l'une quelconque des revendications précédentes, **caractérisé en ce que** les conteneurs (22) sont déposés sur un élément de retenue (40) occupant une position bistable.

6. Procédé selon l'une quelconque des revendications précédentes, **caractérisé en ce que** des conteneurs (22) et/ou des piles (23) individuel(le)s de conteneurs (22) sont introduits dans le dispositif de stockage (14).

7. Procédé selon l'une quelconque des revendications précédentes, **caractérisé en ce que** plusieurs séquences de tri des objets à trier sont mis en oeuvre avec le dispositif de tri (12), dans lequel une cloison de stockage (16) du dispositif de stockage (14) est remplie de manière temporellement alternée avec des conteneurs issus d'un épisode de tri précédent et une autre cloison de stockage (18) est remplie avec des conteneurs issus d'une séquence de tri actuelle.

8. Installation (10) destiné au tri d'objets avec un dispositif de tri (12) qui trie les objets en fonction d'au moins une caractéristique de tri, le dispositif de tri (14) comprenant plusieurs dispositifs de distribution (20) pour les objets triés, avec un dispositif de stockage (16) destiné à la réception de conteneurs (22) accueillant les objets triés et avec au moins un dispositif de levage (34) pour les conteneurs (22) destinés au dispositif de stockage (14), le dispositif de stockage (14) présentant au moins un plan de stockage (25),
**caractérisée en ce que**
le point de transfert (27) des conteneurs (22) au niveau du dispositif de stockage (14) est agencé en dessous du au moins un plan de stockage (25).

9. Installation selon la revendication 8, **caractérisée en ce que** le dispositif de stockage (14) comprend au moins deux cloisons de stockage (16, 18) qui peuvent être garnies indépendamment les unes des autres avec les conteneurs (22).

10. Installation selon la revendication 8 ou 9, **caractérisée en ce que** le dispositif de levage (34) comprend un moyen de réception de charge (36) qui peut être déplacé de manière verticale aussi bien dans l'une des cloisons de stockage (16) que dans l'autre des cloisons de stockage (18).

11. Installation selon l'une quelconque des revendications 8 à 10, **caractérisée en ce que** le dispositif de stockage (14) présente un moyen de retenue (40) destiné à retenir les conteneurs (22).

12. Installation selon la revendication 11, **caractérisée en ce que** le moyen de retenue (40) peut adopter une position distable.

13. Installation selon l'une quelconque des revendications 8 à 12, **caractérisée en ce que** le dispositif de stockage (14) est agencé derrière le dispositif de tri (12).
